# EUROPÄISCHE PATENTSCHRIFT

(11) **EP 2 409 788 B1**
(45) Veröffentlichungstag und Bekanntmachung des Hinweises auf die Patenterteilung: **02.12.2015**
(21) Anmeldenummer: 11003347.9
(22) Anmeldetag: 21.04.2011
(51) Int. Cl.: B08B 5/02, B08B 15/04, B01D 41/04, B08B 9/035, B01D 46/00, B08B 9/00

(54) **Absaugglocke für eine mobile Reinigungsvorrichtung und eine mobile Reinigungsanlage mit einer solchen Absaugglocke sowie Reinigungsverfahren**
Suction bell for a mobile cleaning device, mobile cleaning assembly with such a suction bell and cleaning method
Cloche d'aspiration pour un dispositif de nettoyage mobile, installation de nettoyage mobile dotée d'une telle cloche d'aspiration et procédé de nettoyage

(30) Priorität: 21.07.2010 EP 10007540
(43) Veröffentlichungstag der Anmeldung: 25.01.2012
(73) Patentinhaber: Reining, Christian, 48163 Münster (DE)
(72) Erfinder: Reining, Christian, 48163 Münster (DE)
(74) Vertreter: Kayser, Christoph

(56) Entgegenhaltungen:
- CA-A1- 2 583 540
- DE-A1- 2 340 972
- DE-A1- 3 145 517
- DE-U- 1 936 106
- FR-A- 1 427 379

## Beschreibung

Die vorliegende Erfindung betrifft eine Absaugglocke für eine mobile Reinigungsvorrichtung zur Reinigung von Schlauchfiltern, mit einem Grundkörper, der einen an den Innenumfang einer Schlauchfilteröffnung angepassten Außenumfang und eine Längsachse aufweist. Zudem betrifft die vorliegende Erfindung auch eine Absauganlage mit einer solchen Absaugglocke sowie eine Reinigungsvorrichtung mit einer Absauganlage und einer Absaugglocke und schließlich ein Verfahren zur Reinigung horizontal eingebauter Schlauchfilter unter Verwendung der Absaugglocke, Absauganlage und Reinigungsvorrichtung.

Aus dem Stand der Technik sind Absaugglocken für eine Verwendung zur Reinigung von Schlauchfiltern nicht bekannt. Regelmäßig werden Absaugeinrichtungen nur in der Nähe einer Schlauchfilteröffnung positioniert, um einen beim Reinigungsvorgang dort auftretenden Staubanteil in der Luft abzusaugen. Zu diesem Zweck werden Absauganlagen verwendet, die aus Technikbereichen bekannt sind, bei denen regelmäßig bei der Materialbearbeitung größere Mengen Staub anfallen, die abgesaugt werden müssen. Zum Beispiel sind solche Absaugeinrichtungen bei der Holzverarbeitung bekannt. Bei einem mobilen Einsatz für eine Schlauchfilterreinigung wird das freie Ende eines Absaugschlauchs einfach in die Nähe der Schlauchfilteröffnung positioniert.

Die aus dem Stand der Technik bekannten Absauganlagen bilden im Betrieb keine Einheit mit einer Reinigungsvorrichtung, da sie körperlich nicht miteinander in Verbindung treten. Bei Reinigungsvorrichtungen werden in Regel rotierende Reinigungsköpfe verwendet, die beim Reinigen von horizontal eingebauten Schlauchfiltern schwer zu handhaben sind, wenn keine Einheit zwischen Absauganlage und Reinigungsvorrichtung besteht.

Eine Absaugglocke gemäß dem Oberbegriff des Anspruchs 1 ist beispielsweise aus FR-A-1 427 379 bekannt.

Die Aufgabe der vorliegenden Erfindung ist daher, eine Absaugglocke zu schaffen, die im Betrieb eine Verbindung zwischen einer Absauganlage und einer Reinigungsvorrichtung herstellt und eine im Wesentlichen in Bezug auf die Umgebung eine staubfreie Reinigung von Schlauchfiltern ermöglicht.

Die Aufgabe wird erfindungsgemäß durch die Merkmale des Anspruchs 1 gelöst.

Die Aufgabe wird zudem auch durch eine Absauganlage nach Anspruch 6 gelöst.

Die Aufgabe wird auch durch eine Reinigungsvorrichtung nach Anspruch 12 und durch ein Verfahren nach Anspruch 19 gelöst.

Mit der erfindungsgemäßen Absaugglocke ist es möglich, eine dichte Verbindung zwischen einem Innenumfang einer Schlauchfilteröffnung und einem Außenumfang des Grundkörpers der Absaugglocke herzustellen. Zudem ist es möglich, eine dichte Verbindung zwischen einem Reinigungselement und dem Grundkörper der Absaugglocke herzustellen. Dadurch kann die Absaugglocke im Betrieb als Teil einer Absauganlage oder in Verbindung mit einer Absauganlage ein dichtendes Kupplungselement für eine Reinigungsvorrichtung bilden. Zudem ist es möglicht, dass das Reinigungselement in der Durchgangsöffnung des Grundkörpers eine Führung erhält, die eine kontrollierte Bewegungsbahn sicherstellt. Dies ist insbesondere für die Reinigung horizontal eingebauter Schlauchfilter von Bedeutung.

Ein weiterer Vorteil der vorliegenden Erfindung ist, dass die Durchgangsöffnung parallel zur Längsachse des Grundkörpers verläuft. Durch diese Maßnahme wird die Führungslänge der Durchgangsöffnung für das Reinigungselement optimiert. Auch dies ist insbesondere von Vorteil bei der Reinigung horizontal eingebauter Schlauchfilter. Dies ist aber auch von Vorteil für vertikal eingebaute Schlauchfilter.

Ein weiterer Vorteil der vorliegenden Erfindung ist, dass der Grundkörper in einer Ebene quer zur Längsachse in ein oberes Glockenteil und ein unteres Glockenteil geteilt ist, wobei die erste Filzdichtung am Außenumfang des unteren Glockenteils angebracht ist. Durch die Teilung des Grundkörpers in einen oberen Glockenteil und einen unteren Glockenteil ist es möglich, die Absaugglocke an unterschiedliche Schlauchfilterdurchmesser anzupassen. Es ist also nicht notwendig, die gesamte Absaugglocke in unterschiedlichen Maßen vorzuhalten. Es reicht vielmehr aus, eine Reihe unterschiedlicher unterer Glockenteile vorzuhalten, um eine Anpassung an die jeweilige Schlauchfilteröffnung vorzunehmen.

Ein weiterer Vorteil der vorliegenden Erfindung ist, dass der untere Glockenteil eine Kopfplatte aufweist, auf der eine dritte Filzdichtung angebracht ist, um eine Abdichtung zwischen der Kopfplatte und einer Bodenplatte des oberen Glockenteils zu bilden.

Durch die dritte Filzdichtung wird sichergestellt, dass auch an dieser Verbindungsstelle keine Staubteilchen austreten können.

Ein weiterer Vorteil der vorliegenden Erfindung ist, dass die erste Filzdichtung eine variable Dicke hat, um unterschiedliche Schlauchfilter und Stützkörper abdichten zu können. Durch diese Maßnahme können identische untere Glockenteile auf unterschiedliche Außendurchmesser gebracht werden, um an die jeweiligen Innendurchmesser einer Schlauchfilteröffnung angepasst zu werden.

Ein weiterer Vorteil der vorliegenden Erfindung ist, dass der Grundkörper einen Anschluss für eine Absauganlage aufweist. Durch diese Maßnahme kann die Absaugglocke von einer Absauganlage getrennt gehandhabt werden. Dies erleichtert den mobilen Einsatz der Absaugglocke, zum Beispiel bei einer abwechselnden Reinigung von horizontal eingebauten und vertikal eingebauten Schlauchfiltern.

Die Erfindung wird auch durch eine Absauganlage mit einer erfindungsgemäßen Absaugglocke gelöst. Besonders vorteilhaft ist es, wenn die Absauganlage mobil ausgebildet ist. Dann können vor Ort horizontal eingebaute und vertikal eingebaute Schlauchfilter in gleicher Weise und mit der gleichen Anlage praktisch gereinigt werden.

Ein weiterer Vorteil der vorliegenden Erfindung ist, dass die Absauganlage ein Erdungskabel zur Vermeidung einer statischen Aufladung aufweist. Dadurch wird sichergestellt, dass alle Staubanteile abgesaugt werden und nicht durch statische Aufladung am Gerät und/oder an Geräteteilen haften bleiben.

Ein weiterer Vorteil der vorliegenden Erfindung ist, dass eine Steuereinheit zur Steuerung des Betriebs der Anlage ein Fußpedal zum Aktivieren und Deaktivieren der Absauganlage aufweist. Durch das Aktivieren und Deaktivieren der Absauganlage mittels Fußpedal kann der Benutzer die Hände frei behalten, um zum Beispiel eine Reinigungsvorrichtung zu betätigen.

Die erfindungsgemäße Aufgabe wird auch durch eine Reinigungsvorrichtung mit einer erfindungsgemäßen Absauganlage und einer erfindungsgemäßen Absaugglocke gelöst.

Auch für die Reinigungsvorrichtung ist es von Vorteil, dass diese mobil ausgebildet ist. Dann kann diese mit der mobilen Absauganlage und der separaten Absaugglocke für jeden beliebigen Einsatz zur Reinigung von Schlauchfiltern genutzt werden, sei es, dass diese horizontal eingebaut oder vertikal eingebaut sind.

Ein weiterer Vorteil der vorliegenden Erfindung ist, dass ein Reinigungselement durch die Durchgangsöffnung der Absaugglocke hindurchgeführt und hin und her bewegbar ist. Durch diese Maßnahme erfolgt die eigentliche Kopplung zwischen Reinigungsvorrichtung, Absauganlage und Schlauchfilter. Durch die dichte Verbindung der Absaugglocke mit dem Schlauchfilter sowie der Absaugglocke mit dem Reinigungselement lässt sich eine Reinigung durchführen, ohne dass Staub in die Umgebung gelangt. Dadurch kann das ganze Equipment auch in Reinräumen oder zumindest in weitestgehend staubfrei zu haltenden Räumen eingesetzt werden

Ein weiterer Vorteil der vorliegenden Erfindung ist, dass am freien Ende des Reinigungselements ein Reinigungskopf mit wenigstens einer Reinigungsdüse angeordnet ist. Eine Reinigungsdüse erlaubt einen kontrollierten Volumenstrom zur Reinigung eines verschmutzten Schlauchfilters. Von besonderem Vorteil ist, dass der Reinigungskopf und/oder die wenigstens eine Reinigungsdüse im Betrieb in Rotation versetzt ist. Solche sogenannten Rotationsdüsen erlauben eine optimale Reinigung über den gesamten Umfang des Schlauchfilters.

Die Aufgabe wird auch durch ein Verfahren zur Reinigung horizontal eingebauter Schlauchfilter gelöst. Für horizontal eingebaute Schlauchfilter ist bisher nicht bekannt, Rotationsdüsen einzusetzen. Mit der erfindungsgemäßen Absaugglocke, Absauganlage und Reinigungsvorrichtung ist aber auch bei horizontal eingebauten Schlauchfiltern die Reinigung mit einer Rotationsdüse möglich, ohne dass Staub an die Umgebung austritt.

Eine Ausführungsform der vorliegenden Erfindung wird im Folgenden anhand der Zeichnungen näher beschrieben. Es zeigen:
Fig. 1 eine schematische Ansicht einer Reinigungsvorrichtung, Absaugglocke, Absauganlage gemäß vorliegender Erfindung;
Fig. 2 eine perspektivische Ansicht einer erfindungsgemäßen Absaugglocke mit unterschiedlichen unteren Glockenteilen; und
Fig. 3 eine perspektivische Ansicht eines oberen Glockenteils gemäß vorliegender Erfindung mit einer Durchgangsöffnung für ein Reinigungselement mit Filzabdichtung.

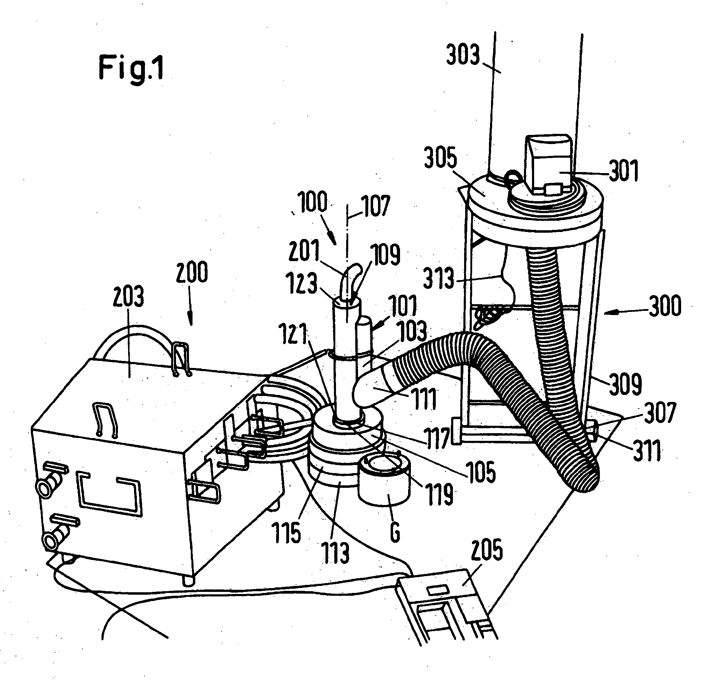

In Fig. 1 ist schematisch ein komplettes Reinigungsequipment dargestellt. Das Reinigungsepuipment umfasst eine Absaugglocke 100, eine Absauganlage 200 sowie eine Reinigungsvorrichtung 300.

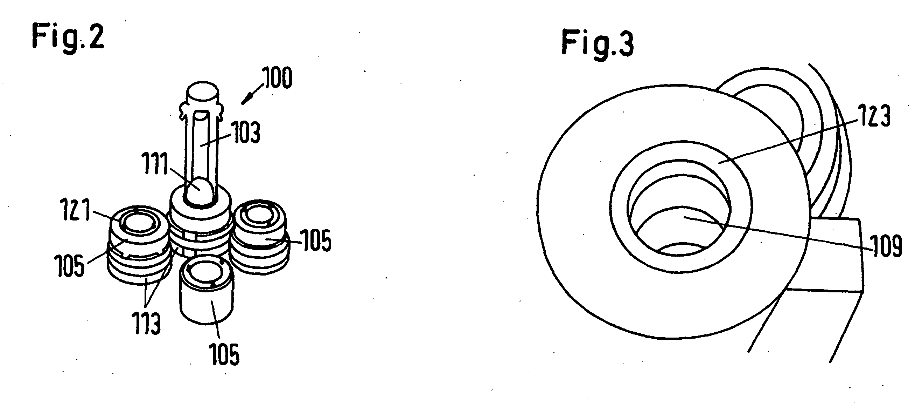

Die Absaugglocke 100 weist einen Grundkörper 101 auf, der in der vorliegenden Ausführungsform aus einem oberen Glockenteil 103 und einem unteren Glockenteil 105 zusammengesetzt ist. In anderen Ausführungsformen kann der Grundkörper 101 auch einteilig oder aus beliebig vielen Teilen zusammengesetzt sein. Der Grundkörper 101 hat eine Längsachse 107. Parallel zu der Längsachse 107 und in der vorliegenden Ausführungsform auch konzentrisch zu dieser durchläuft den Grundkörper 101 eine Durchgangsöffnung 109 (siehe Fig. 3). Die Durchgangsöffnung 109 durchläuft den gesamten Grundkörper 101, das heißt, sowohl das obere Glockenteil 103 als auch das untere Glockenteil 105.

An dem Grundkörper 101 und in der vorliegenden Ausführungsform am oberen Glockenteil 103 ist seitlich ein Anschlussstutzen 111 zum Anschließen der Absauganlage 300 ausgebildet. Der Anschlussstutzen 111 erstreckt sich in einem Winkel zur Längsachse 107, so dass zwischen dem Grundkörper 101 bzw. dem oberen Glockenteil 103 und dem Anschlussstutzen 111 ein spitzer Winkel eingeschlossen wird. In Fig. 1 ist zu sehen, dass der Anschlussstutzen 111 in Bezug zum Grundkörper 101 nach schräg oben verläuft, wenn die Absaugglocke 100 in ihrer Betriebsfunktion zur Reinigung eines vertikal eingebauten Schlauchfilters ausgerichtet ist. Bei einer Anordnung der Absaugglocke zur Reinigung eines horizontal eingebauten Schlauchfilters wäre der Anschlussstutzen 111 nach schräg hinten gerichtet.

An dem Grundkörper 101 und in der vorliegenden Ausführungsform am unteren Glockenteil 105 ist eine erste Filzdichtung 113 angebracht. Die erste Filzdichtung 113 umschließt den unteren Glockenteil 105 vollständig. Die Befestigung der ersten Filzdichtung 113 erfolgt zum Beispiel durch Kleber oder aber in vorteilhafter Weise mechanisch mithilfe eines Spannelements 115. Das untere Glockenteil 105 weist eine Kopfplatte 117 auf und das obere Glockenteil 103 weist eine an die Kopfplatte 117 anstoßende Bodenplatte 119 auf. Zwischen der Kopfplatte 117 und der Bodenplatte 119 ist eine zweite Filzdichtung 121 angebracht.

In der Durchgangsöffnung 109 ist eine dritte Filzdichtung 123 angebracht (siehe Fig. 3). Die dritte Filzdichtung 123 umschließt den Innendurchmesser der Durchgangsöffnung 109 in einem Eintrittbereich für ein Reinigungselement.

Das untere Glockenteil 105 ist gegenüber dem oberen Glockenteil 103 austauschbar angebracht, zum Beispiel durch Verschraubung. In Fig. 1 ist ein anderes unteres Glockenteil G dargestellt, das einen geringeren Außendurchmesser hat als das untere Glockenteil 105. Durch die Verbindung unterschiedlicher unterer Glockenteile 105/G mit dem oberen Glockenteil 103 kann die Absaugglocke 100 insgesamt an einen unterschiedlichen Innendurchmesser eines Schlauchfilters angepasst werden. Eine weitere Anpassung ist möglich, wenn die Dicke der ersten Filzdichtung 113 variiert wird.

In Fig. 1 ist auch die Absauganlage 300 dargestellt. Die Absauganlage 300 umfasst eine herkömmliche Absaugeinrichtung mit Elektromotor 301 und einem Auffangsack 303. Zwischen einem Gehäuse 305, an welchem der Elektromotor 301 angebracht ist, und dem Anschlussstutzen 111 der Absaugglocke 100 ist ein Absaugschlauch 307 angeordnet. Der Absaugschlauch 307 ist flexibel und in der Länge in einem vorbestimmten Maße dehnbar. Die Verbindung des Absaugschlauchs 307 an dem Anschlussstutzen 111 erfolgt durch übliche Verbindungselemente, zum Beispiel Schlauchschellen. Im verbundenen Zustand bildet die Absaugglocke 100 ein Anschlussstück der Absauganlage 300 zum Anschluss an einen Schlauchfilter. Die Absauganlage 300 umfasst an ihrem Gehäuse 309 Räder 311, so dass diese mobil ist. Die Absauganlage 300 umfasst auch ein Erdungskabel 313, mit dem eine statische Aufladung verhindert wird.

Das Reinigungsequipment umfasst auch eine Reinigungsvorrichtung 200 mit einem Reinigungselement 201, das im vorliegenden Fall ein Reinigungsschlauch ist. In anderen Ausführungsformen kann das Reinigungselement 201 auch eine feste Lanze bilden.

Der Reinigungsschlauch 201 ist flexibel und mit einer Steuereinheit 203 verbunden. Die Steuereinheit 203 umfasst eine übliche elektrische Einrichtung zum Öffnen und Schließen einer Druckluftzufuhr sowie zum Aktivieren und Deaktivieren der Reinigungsvorrichtung und gegebenenfalls auch der Ansauganlage 300.

Für die Bedienung der Steuereinheit 203 ist ein Fußpedal 205 vorgesehen. Das Fußpedal 205 ist über elektrische Kabel mit der Steuereinheit 203 verbunden, wobei die Steuereinheit 203 wiederum gegebenenfalls über elektrische Kabel (nicht dargestellt) mit der Absauganlage 300 verbunden ist. Durch Betätigen des Fußpedals 205 kann einerseits die Druckluftzufuhr unterbrochen oder hergestellt und andererseits die Reinigungsvorrichtung und/oder die Absauganlage aktiviert oder deaktiviert werden. Selbstverständlich kann die Steuereinheit noch eine Vielzahl von weiteren Funktionen umfassen, die wenigstens teilweise über das Fußpedal 205 ausgelöst oder unterbunden werden können. Die Steuertechnik ist Stand der Technik und hier nicht Gegenstand der vorliegenden Erfindung. An einem freien Ende des Reinigungselements 201 ist ein Reinigungskopf (nicht dargestellt) mit wenigstens einer Reinigungsdüse angebracht. In der vorliegenden Ausführungsform soll der Reinigungskopf bzw die wenigstens eine Reinigungsdüse im Betrieb rotieren. Natürlich können in anderen Ausführungsformen auch nicht-rotierende Reinigungsköpfe bzw. Reinigungsdüsen verwendet werden.

In Fig. 2 ist schematisch die Absaugglocke 200 mit verschiedenen unteren Glockenteilen 105 dargestellt. In Fig. 3 ist schematisch dargestellt, wie die dritte Filzdichtung 123 im Bereich des Eintritts des Reinigungsschlauchs 201 am Innenumfang der Durchgangsöffnung 109 des oberen Glockenteils 103 bzw. Grundkörpers 101 angeordnet ist. Durch eine Variation der Dicke der Filzdichtung 123 ist es möglich, eine Abdichtung gegenüber unterschiedlich dicken Reinigungselementen 201 herzustellen. In Fig. 2 ist auch deutlich die zweite Filzdichtung 121 dargestellt.

Für einen Reinigungsvorgang wird die Absauganlage 300 mit der Absaugglocke 100 und mit der Reinigungseinrichtung 200 verbunden. Die erfindungsgemäße mobile Absauganlage 300 hat einen maximalen Volumenstrom von 1100 cbm/h bei einer Pressung von 1750 Pa. Ein Reststaub aus den Filterschläuchen wird nicht freigesetzt, sondern abgesaugt. Die Reinigungsschläuche 201 sind für einen Druck von bis zu 20 bar ausgelegt. Eine maximale Temperaturbeständigkeit liegt bei 180°C. Somit sind Reinigungen von Filteranlagen auch im Hochtemperaturbereich im N-1 Betrieb (ohne Stillstand) möglich. Die Druckluftschläuche haben eine Stahlgewebeeinlage und werden über Erdungskabel zusätzlich geerdet. Somit wird auch hier eine Erdung gegenüber statischen Aufladungen durchgeführt und eine Funkenbildung verhindert. Die Steuereinheit 203 weist für jeden Reinigungskopf (nicht dargestellt) und somit jede Absauganlage 300 ein Fußpedal 205.

Zur Durchführung einer Reinigung wird das Reinigungselement 201 der Reinigungsvorrichtung 200 durch die Absaugglocke und die Schlauchfilteröffnung in den Schlauchfilter eingeführt. Dann wird die Steuereinheit 203 aktiviert und das Reinigungselement 201 im Schlauchfilter bewegt, zum Beispiel hin und her bewegt. Nach Beendigung des Reinigungsvorgangs wird die Steuereinheit 203 deaktiviert, zum Beispiel über das Fußpedal 205. Dann wird das Reinigungselement 201 aus dem Schlauchfilter herausgezogen. Die Absauganlage 300 wird dann von dem Schlauchfilter gelöst, indem die Absaugglocke 100 aus der Schlauchfilteröffnung herausgenommen wird.

Bei der Reinigung von horizontal oder vertikal eingebauten Schlauchfiltern kommen in der vorliegenden Ausführungsform Reinigungselemente mit Rotationsdüsen zum Einsatz. Rotationsdüsen sind aus dem Stand der Technik allgemein bekannt und nicht Teil der vorliegenden Erfindung.

### Bezugszeichenliste

- 100: Absaugglocke
- 101: Grundkörper
- 103: oberer Glockenteil
- 105: unterer Glockenteil
- 107: Längsachse
- 109: Durchgangsöffnung
- 111: Anschlussstutzen
- 113: erste Filzdichtung
- 115: Spannelement
- 117: Kopfplatte
- 119: Bodenplatte
- 121: zweite Filzdichtung
- 123: dritte Filzdichtung
- G: unteres Glockenteil
- 200: Reinigungsvorrichtung
- 201: Reinigungselement
- 203: Steuereinheit
- 205: Fußpedal
- 300: Absauganlage
- 301: Elektromotor
- 303: Auffangsack
- 305: Gehäuse
- 307: Absaugschlauch
- 309: Gehäuse
- 311: Räder
- 313: Erdungskabel

## Patentansprüche

1. Absaugglocke (100) für Schlauchfilter zur Druckreinigung mittels Rotationsdüsen, mit einem Grundkörper (101), der einen an einen Innenumfang einer Schlauchfilteröffnung ange-passten Außenumfang, eine Durchgangsöffnung (109) für ein Reinigungselement (201) und eine Längsachse (107) aufweist,
**dadurch gekennzeichnet,**
**dass** der Grundkörper (101) in einer Ebene quer zur Längsachse (107) in einen oberen Glockenteil (103) und einen unteren Glockenteil (105) geteilt ist, wobei der oberen Glockenteil (103) mit dem unteren Glockenteil (105) lösbar verbunden ist, und
**dass** eine erste Filzdichtung (113) am Außenumfang des unteren Glockenteils (105) angebracht ist und eine zweite Filzdichtung (121) am Innenumfang der Durchgangsöffnung (109) angebracht ist

2. Absaugglocke (100) nach Anspruch 1,
**dadurch gekennzeichnet,**
**dass** die Durchgangsöffnung (109) parallel zur Längsachse (107) ausgebildet ist.

3. Absaugglocke (100) nach Anspruch 2,
**dadurch gekennzeichnet,**
**dass** der untere Glockenteil (105) eine Kopfplatte (117) aufweist, auf der eine dritte Filzdichtung (123) angebracht ist, um eine Abdichtung zwischen der Kopfplatte (117) und einer Bodenplatte (119) des oberen Glockenteils (103) zu bilden.

4. Absaugglocke (100) nach einem der vorstehenden Ansprüche,
**dadurch gekennzeichnet,**
**dass** die erste Filzdichtung (113) eine variable Dicke hat, um unterschiedliche Schlauchfilter und Stützkörbe abdichten zu können.

5. Absaugglocke (100) nach einem der vorstehenden Ansprüche,
**dadurch gekennzeichnet,**
**dass** der Grundkörper (101) einen Anschlussstutzen (111) für eine Absauganlage (300) aufweist.

6. Absauganlage (300) mit einer Absaugglocke (100) nach einem der Ansprüche 1 bis 5.

7. Absauganlage (300) nach Anspruch 6,
**dadurch gekennzeichnet,**
**dass** diese mobil ausgebildet ist.

8. Absauganlage (300) nach Anspruch 6 oder 7,
**dadurch gekennzeichnet,**
**dass** diese einen maximalen Volumenstrom von 1100 m³/h bei einer Pressung von 1750 Pa hat.

9. Absauganlage (300) nach einem der Ansprüche 6 bis 8,
**dadurch gekennzeichnet,**
**dass** ein Erdungskabel (313) zur Vermeidung einer statischen Aufladung vorgesehen ist.

10. Absauganlage (300) nach einem der Ansprüche 6 bis 9,
**dadurch gekennzeichnet,**
**dass** eine Steuereinheit (203) zur Steuerung des Betriebs der Anlage ein erstes Fußpedal (205) zum Aktivieren und Deaktivieren der Absauganlage (300) aufweist.

11. Absauganlage (300) nach einem der Ansprüche 6 bis 10,
**dadurch gekennzeichnet,**
**dass** ein Absaugschlauch (307) an der Absaugglocke (100) seitlich, quer zur Längsachse (107) der Absaugglocke (100) angeschlossen ist.

12. Reinigungsvorrichtung (200) mit einer Absauganlage (300) nach einem der Ansprüche 6 bis 11 und einer Absaugglocke (100)nach einem der Ansprüche 1 bis 5.

13. Reinigungsvorrichtung (200) nach Anspruch 12,
**dadurch gekennzeichnet,**
**dass** diese mobil ausgebildet ist.

14. Reinigungsvorrichtung (200) nach Anspruch 12 oder 13,
**dadurch gekennzeichnet,**
**dass** ein Reinigungselement (201) durch die Durchgangsöffnung (109) der Absaugglocke (100) hindurchgeführt und hin und her bewegbar ist.

15. Reinigungsvorrichtung (200) nach Anspruch 14,
**dadurch gekennzeichnet,**
**dass** am freien Ende des Reinigungselements (201) ein Reinigungskopf mit wenigstens einer Reinigungsdüse angeordnet ist.

16. Reinigungsvorrichtung (200) nach Anspruch 15,
**dadurch gekennzeichnet,**
**dass** der Reinigungskopf und/oder die wenigstens eine Reinigungsdüse im Betrieb in Rotation versetzt ist.

17. Reinigungsvorrichtung (200) nach einem der Ansprüche 12 bis 16,
**dadurch gekennzeichnet,**
**dass** eine Steuereinheit (203) zur Steuerung des Betriebs ein zweites Fußpedal (205) zum Aktivieren und Deaktivieren der Reinigungsvorrichtung (200) aufweist.

18. Reinigungsvorrichtung (200) nach Anspruch 17,
**dadurch gekennzeichnet,**
**dass** das erste und zweite Fußpedal (205) ein und dasselbe Fußpedale sind.

19. Verfahren zur Reinigung horizontal eingebauter Schlauchfilter, mit den Schritten:
- Bereitstellen einer Reinigungsvorrichtung nach einem der Ansprüche 12 bis 18;
- Anschließen einer Absauganlage nach einem der Ansprüche 6 bis 11 mit einer Absaugglocke nach einem der Ansprüche 1 bis 5 an den Schlauchfilter;
- Einführen des Reinigungselements in den Schlauchfilter;
- Aktivieren der Steuereinheit;
- Bewegen des Reinigungselements im Schlauchfilter;
- Deaktivieren der Steuereinheit;
- Herausziehen des Reinigungselements aus dem Schlauchfilter;
- Lösen der Absauganlage vom Schlauchfilter.

## Claims

1. A suction bell (100) for a bag filter for pressure cleaning by means of rotation nozzles, with a basic body (101), which has an external circumference adapted to the internal circumference of the bag filter opening, a through-opening (109) for a cleaning element (201) and a longitudinal axis (107),
**characterised in that**
the basic body (101) is divided in a plane normal to the longitudinal axis (107) into an upper bell part (103) and a lower bell part (105), wherein the upper bell part (103) is connected detachably to be lower bell part (105), and
a first felt seal (113) is provided at the external circumference of the lower bell part (105) and a second felt seal (121) is provided at the internal circumference of the through-opening (109).

2. The suction bell (100) according to claim 1,
**characterised in that**
the through-opening (109) is constituted parallel to the longitudinal axis (107).

3. The suction bell (100) according to claim 2,
**characterised in that**
the lower bell part (105) comprises a top plate (117), on which a third felt seal (123) is provided in order to form a seal between the top plate (117) and a bottom plate (119) of the upper bell part (103).

4. The suction bell (100) according to any one of the preceding claims,
**characterised in that**
the first felt seal (113) has a variable thickness in order to be able to seal different bag filters and supporting baskets.

5. The suction bell (100) according to any one of the preceding claims,
**characterised in that**
the basic body (101) comprises a connection piece (111) for a suction plant (300).

6. A suction plant (300) with a suction bell (100) according to any one of claims 1 to 5.

7. The suction plant (300) according to claim 6,
**characterised in that**
the latter is constituted mobile.

8. The suction plant (300) according to claim 6 or 7,
**characterised in that**
the latter has a maximum volume flow of 1100 m³/h at a pressure of 1750 Pa.

9. The suction plant (300) according to any one of claims 6 to 8,
**characterised in that**
the earth cable (313) is provided to prevent a static charge.

10. The suction plant (300) according to any one of claims 6 to 9,
**characterised in that**
a control unit (203) for controlling the operation of the plant comprises a first foot pedal (205) for activating and deactivating the suction plant (300).

11. The suction plant (300) according to any one of claims 6 to 10,
**characterised in that**
a suction hose (307) is connected to the suction bell (100) laterally, normal to the longitudinal axis (107) of the suction bell (100).

12. A cleaning device (200) with a suction plant (300) according to any one claim 6 to 11 and a suction bell (100) according to any one of claims 1 to 5.

13. The cleaning device (200) according to claim 12,
**characterised in that**
the latter is constituted mobile.

14. The cleaning device (200) according to claim 12 or 13,
**characterised in that**
a cleaning element (201) is passed through the through-opening (109) of the suction bell (100) and can be moved back and forth.

15. The cleaning device (200) according to claim 14,
**characterised in that**
a cleaning head with at least one cleaning nozzle is disposed at the free end of the cleaning element (201).

16. The cleaning device (200) according to claim 15,
**characterised in that**
the cleaning head and/or the at least one cleaning nozzle is caused to rotate during operation.

17. The cleaning device (200) according to any one of claims 12 to 16,
**characterised in that**
a control unit (203) for controlling the operation comprises a second foot pedal (205) for activating and deactivating the cleaning device (200).

18. The cleaning device (200) according to claim 17,
**characterised in that**
the first and second foot pedal (205) are one and the same foot pedal.

19. A method for cleaning horizontally fitted bag filters, with the steps:
- provision of a cleaning device according to any one of claims 12 to 18;
- connection of a suction plant according to any one of claims 6 to 11 with a suction bell according to any one of claims 1 to 5 to the bag filter;
- introduction of the cleaning element into the bag filter;
- activation of the control unit;
- movement of the cleaning element in the bag filter;
- deactivation of the control unit;
- removal of the cleaning element from the bag filter;
- detachment of the suction plant from the bag filter.

## Revendications

1. Cloche aspirante (100) pour des filtres de flexible pour le nettoyage sous pression au moyen de buses rotatives, comprenant un corps de base (101), qui présente un pourtour extérieur adapté à un pourtour intérieur d'une ouverture de filtre de flexible, une ouverture traversante (109) pour un élément de nettoyage (201) et un axe longitudinal (107),
**caractérisée en ce que** le corps de base (101) est divisé dans un plan transversal à l'axe longitudinal (107) en une partie de cloche supérieure (103) et une partie de cloche inférieure (105), sachant que la partie de cloche supérieure (103) est reliée de façon séparable à la partie de cloche inférieure (105), et
qu'un premier feutre d'étanchéité (113) est appliqué sur le pourtour extérieur de la partie de cloche inférieure (105) et un deuxième feutre d'étanchéité (121) est appliqué sur le pourtour intérieur de l'ouverture traversante (109).

2. Cloche aspirante (100) selon la revendication 1, **caractérisée en ce que** l'ouverture traversante (109) est conçue parallèle à l'axe longitudinal (107).

3. Cloche aspirante (100) selon la revendication 2, **caractérisée en ce que** la partie de cloche inférieure (105) présente une plaque frontale (117) sur laquelle un troisième feutre d'étanchéité (123) est placé, pour former une étanchéité entre la plaque frontale (117) et une plaque inférieure (119) de la partie de cloche supérieure (103).

4. Cloche aspirante (100) selon l'une des revendications précédentes, **caractérisée en ce que** le premier feutre d'étanchéité (113) présente une épaisseur variable afin de pouvoir étanchéifier différents filtres de flexibles et paniers de support.

5. Cloche aspirante (100) selon l'une des revendications précédentes, **caractérisée en ce que** le corps de base (101) présente une tubulure de raccordement (111) pour une installation aspirante (300).

6. Installation aspirante (300) comprenant une cloche aspirante (100) selon l'une des revendications 1 à 5.

7. Installation aspirante (300) selon la revendication 6, **caractérisée en ce que** celle-ci est mobile.

8. Installation aspirante (300) selon la revendication 6 ou 7, **caractérisée en ce que** celle-ci présente un débit volumique maximal de 1100 m³/h pour une compression de 1750 Pa.

9. Installation aspirante (300) selon l'une des revendications 6 à 8, **caractérisée en ce qu'**un câble de mise à la terre (313) est prévu pour éviter une charge statique.

10. Installation aspirante (300) selon l'une des revendications 6 à 9, **caractérisée en ce qu'**une unité de commande (203) pour commander le fonctionnement de l'installation présente une première pédale de pied (205) pour activer et désactiver l'installation aspirante (300).

11. Installation aspirante (300) selon l'une des
revendications 6 à 10, **caractérisée en ce qu'**un flexible aspirant (307) est raccordé à la cloche aspirante (100) latéralement, transversalement à l'axe longitudinal (107) de la cloche aspirante (100).

12. Dispositif de nettoyage (200) comprenant une installation aspirante (300) selon l'une des revendications 6 à 11 et une cloche aspirante (100) selon l'une des revendications 1 à 5.

13. Dispositif de nettoyage (200) selon la revendication 12, **caractérisé en ce que** celui-ci est conçu mobile.

14. Dispositif de nettoyage (200) selon la revendication 12 ou 13, **caractérisé en ce qu'**un élément de nettoyage (201) est dirigé d'avant en arrière au travers de l'ouverture traversante (109) de la cloche aspirante (100).

15. Dispositif de nettoyage (200) selon la revendication 14, **caractérisé en ce qu'**une tête de nettoyage comprenant au moins une buse de nettoyage est disposée sur l'extrémité libre de l'élément de nettoyage (201).

16. Dispositif de nettoyage (200) selon la revendication 15, **caractérisé en ce que** la tête de nettoyage et/ou l'au moins une buse de nettoyage est/sont décalée(s) en rotation en fonctionnement.

17. Dispositif de nettoyage (200) selon l'une des revendications 12 à 16, **caractérisé en ce qu'**une unité de commande (203) pour commander le fonctionnement présente une seconde pédale de pied (205) pour activer et désactiver le dispositif de nettoyage (200).

18. Dispositif de nettoyage (200) selon la revendication 17, **caractérisé en ce que** les première et seconde pédales de pied (205) sont une seule et même pédale de pied.

19. Procédé de nettoyage de filtres de flexible montés horizontalement, comprenant les étapes :
- de mise à disposition d'un dispositif de nettoyage selon l'une des revendications 12 à 18 ;
- de raccordement d'une installation aspirante selon l'une des revendications 6 à 11 comprenant une cloche aspirante selon l'une des revendications 1 à 5 sur le filtre de flexible ;
- d'introduction de l'élément de nettoyage dans le filtre de flexible ;
- d'activation de l'unité de commande ;
- de déplacement de l'élément de nettoyage dans le filtre de flexible ;
- de désactivation de l'unité de commande ;
- de retrait de l'élément de nettoyage hors du filtre de flexible ;
- de séparation de l'installation d'aspiration du filtre de flexible.
